# EUROPEAN PATENT APPLICATION

(11) **EP 3 272 715 A1**
(43) Date of publication of application: **24.01.2018**
(21) Application number: 16768648.4
(22) Date of filing: 17.03.2016
(51) Int. Cl.: C02F 1/50, H05H 1/24

(54) **WATER TREATMENT DEVICE, WATER TREATMENT METHOD, STERILE WATER PRODUCTION DEVICE, AND STERILE WATER PRODUCTION METHOD**

(30) Priority: 20.03.2015 JP 2015058495
(71) Applicant: NGK Insulators, Ltd., Nagoya-shi, Aichi 467-8530 (JP)
(72) Inventor: YOKOYAMA Takashi, Nagoya-shi Aichi 467-8530 (JP); TANGE Shoji, Nagoya-shi Aichi 467-8530 (JP); SHIMIZU Hideki, Nagoya-shi Aichi 467-8530 (JP)
(74) Representative: Naylor, Matthew John
(86) International application number: PCT/JP2016/058610
(87) International publication number: WO 2016/152745

(57) **Abstract**

The present invention relates to a water treatment device, water treatment method, sterile water production device, and sterile water production method. The present invention comprises: first electrodes (12A) and second electrodes (12B); and a ceramic structure (18) in which an active species is produced by plasma (26) which is generated between the first electrodes (12A) and the second electrodes (12B) after the introduction of a gas (14), and the active species is introduced into water (16). The electrodes of the first electrodes (12A) and/or the second electrodes (12B) are integrated with the ceramic structure (18).

## Description

### Technical Field

The present invention relates to a water treatment device, a water treatment method, a sterile water production device, and a sterile water production method.

### Background Art

As conventional water treatment devices, the devices described, for example, in Japanese Laid-Open Patent Publication No. 2013-128909, Japanese Patent No. 5204061, and Japanese Patent No. 5464692 are known.

In the water treatment device described in Japanese Laid-Open Patent Publication No. 2013-128909, a plurality of openings are provided in a plasma introduction unit for introducing a plasma into water. By controlling pressure and flow rate of gas introduced into the water, uniform bubbles are supplied to the plurality of openings. A voltage is applied to a bubble generating unit and into the water, an electric discharge is caused in the bubbles that are generated in the water, and a plasma is generated in the bubbles.

In the water treatment device described in exemplary embodiments 3 and 5 disclosed in Japanese Patent No. 5204061, a voltage is applied to a bubble generating unit and into water, an electric discharge is caused in the bubbles that are generated in the water, and a plasma is generated in the bubbles.

In the water treatment device disclosed in Japanese Patent No. 5464692, a plasma is generated during cavitation generated by way of a boiling phenomenon in water to be treated that is introduced into an orifice.

### Summary of Invention

However, with the water treatment devices disclosed in Japanese Laid-Open Patent Publication No. 2013-128909, Japanese Patent No. 5204061, and Japanese Patent No. 5464692, in order to cause a discharge to occur within air bubbles in water, a dielectric constant of water is added to a discharge gap, and a large electric power is required. This leads to a decrease in energy efficiency.

Further, by causing an electric discharge in the air bubbles in water, the shapes of the bubbles are not stable, and the efficiency at which the active species generated by the plasma dissolves in the water worsens, and along therewith, the sterilization efficiency and the processing efficiency also deteriorate.

The present invention has been devised taking into consideration the aforementioned problems, and an object of the present invention is to provide a water treatment device and a water treatment method, which are capable of improving the energy efficiency of plasma generation, as well as improving the efficiency with which an active species generated by plasma is dissolved in water.

Further, another object of the present invention is to provide a sterile water production device and a sterile water production method, which are capable of improving the energy efficiency of plasma generation, enhancing the efficiency with which an active species generated by the plasma is dissolved in water, and producing a large amount of active species with a bactericidal effect in water.

The active species is a substance having a bactericidal effect, which is produced at the site of plasma generation, and as examples thereof, there may be cited chemical substances such as hydrogen peroxide water and ozone, as well as ions and radicals.
[1] A water treatment device according to a first aspect of the present invention is characterized by including a first electrode and a second electrode, and a ceramic structural body into which a gas is introduced, and which is configured to introduce into water an active species produced by a plasma which is generated between the first electrode and the second electrode, wherein the ceramic structural body and at least one electrode from among the first electrode and the second electrode are formed together in an integrated manner.
[2] In the first aspect of the present invention, the one electrode may be formed integrally with the ceramic structural body, the one electrode may have a lattice shape, the ceramic structural body may have a plate shape including one principal surface that is disposed in the water, and another principal surface arranged oppositely to the one principal surface, and further, the ceramic structural body may have a through hole formed therein at a location corresponding to at least a lattice square of the one electrode. In addition, the other electrode from among the first electrode and the second electrode may have a needle shape, and a distal end thereof may be arranged to face toward the through hole of the ceramic structural body, and the gas may be supplied in a direction from the other principal surface toward the one principal surface of the ceramic structural body.
[3] In this case, the one electrode may be disposed in an interior or on a surface of the ceramic structural body.
[4] In the first aspect of the present invention, the ceramic structural body may have a columnar shape including one principal surface that is disposed in the water, another principal surface arranged oppositely to the one principal surface, and a side surface. The first electrode and the second electrode may be disposed in facing relation to each other on the side surface of the ceramic structural body, and may be formed in an integrated manner with the ceramic structural body, and the gas may be supplied in a direction from the other principal surface toward the one principal surface of the ceramic structural body.
[5] In this case, the first electrode and the second electrode may be disposed in an interior or on a surface of the ceramic structural body, and may be formed in an integrated manner with the ceramic structural body.
[6] In the first aspect of the present invention, the ceramic structural body may have a columnar shape, and further, may include one principal surface to which the gas is supplied, another principal surface arranged oppositely to the one principal surface and to which the gas is supplied, and a side surface disposed in the water. The one electrode may have a columnar shape, and may be arranged along an axial direction of the ceramic structural body, and the other electrode from among the first electrode and the second electrode may have a lattice shape, and may be disposed on the ceramic structural body in surrounding relation to the one electrode.
[7] In this case, the one electrode may be disposed in the interior of the ceramic structural body, the other electrode may be disposed in the interior or on a surface of the ceramic structural body, and the one electrode and the other electrode may be formed in an integrated manner with the ceramic structural body.
[8] In the first aspect of the present invention, the ceramic structural body may have a columnar shape, and further, may include one principal surface to which the gas is supplied, another principal surface arranged oppositely to the one principal surface and which is disposed in the water, and a side surface with a portion thereof being disposed in the water. A plurality of holes may be formed in the ceramic structural body from the one principal surface and extending toward the other principal surface, and the one electrode may include rod shapes and which are arranged inside the holes. Further, the other electrode from among the first electrode and the second electrode may be arranged within the ceramic structural body between bottom parts of the holes and the other principal surface.
[9] In the first aspect of the present invention, the first electrode and the second electrode may be formed integrally with the ceramic structural body, and the first electrode and the second electrode may each have rod shapes extending in one direction, and may be arranged alternately in a direction orthogonal to the one direction. The ceramic structural body may have a plate shape including one principal surface that is disposed in the water, and another principal surface arranged oppositely to the one principal surface, the ceramic structural body also having a plurality of through holes formed therein between the first electrode and the second electrode. Further, the gas may be supplied in a direction from the other principal surface toward the one principal surface of the ceramic structural body.
[10] In this case, the first electrode and the second electrode may be disposed in an interior or on a surface of the ceramic structural body, and may be formed in an integrated manner with the ceramic structural body.
[11] In the first aspect of the present invention, the ceramic structural body may have a columnar shape including one principal surface that is disposed in the water, another principal surface arranged oppositely to the one principal surface, and a side surface, and further, may include a plurality of through holes that penetrate from the other principal surface to the one principal surface. The first electrode and the second electrode may be disposed in facing relation to each other on the side surface of the ceramic structural body, and may be formed in an integrated manner with the ceramic structural body. Further, the gas may be supplied in a direction from the other principal surface toward the one principal surface of the ceramic structural body.
[12] In this case, the first electrode and the second electrode may be disposed inside or on a surface of the ceramic structural body, and may be formed in an integrated manner with the ceramic structural body.
[13] A water treatment method according to a second aspect of the present invention is characterized by performing a water treatment using the aforementioned water treatment device according to the first aspect of the present invention.
[14] A sterile water production device according to a third aspect of the present invention is characterized by including a first electrode and a second electrode, and a ceramic structural body into which a gas is introduced, and which is configured to produce an active species in water, by introducing into the water the active species produced by a plasma which is generated between the first electrode and the second electrode, wherein the ceramic structural body and at least one electrode from among the first electrode and the second electrode are formed together in an integrated manner.
[15] A sterile water production method according to a fourth aspect of the present invention is characterized by producing sterile water using the sterile water production device according to the aforementioned third aspect of the present invention.

In accordance with the water treatment device and the water treatment method of the present invention, it is possible for the location of plasma generation, and the location where the generated plasma is introduced into water to be integrated. As a result, generation of the plasma is capable of being carried out in a gas, a large amount of electric power, as was required conventionally, is rendered unnecessary, and energy efficiency can be improved. Further, since generation of the plasma and dissolving of the active species generated by the plasma in water can be carried out instantaneously, the active species which is produced by the generated plasma can be dissolved in the water without becoming deactivated, and it is possible to enhance the efficiency at which the active species is dissolved.

In accordance with the sterile water production device and the sterile water production method according to the present invention, by utilizing as the gas an oxygen-containing gas, a nitrogen-containing gas, a mixed gas made up of oxygen and nitrogen, atmospheric air, or the like, an active species having a high bactericidal effect is produced by a plasma. As a result, it is possible for an active species having a bactericidal effect to be spread over a wide range in water in a short period of time, and to increase the concentration of the active species in water. In addition, the water, for example, can be made into sterile water having a high bactericidal effect.

### Brief Description of Drawings

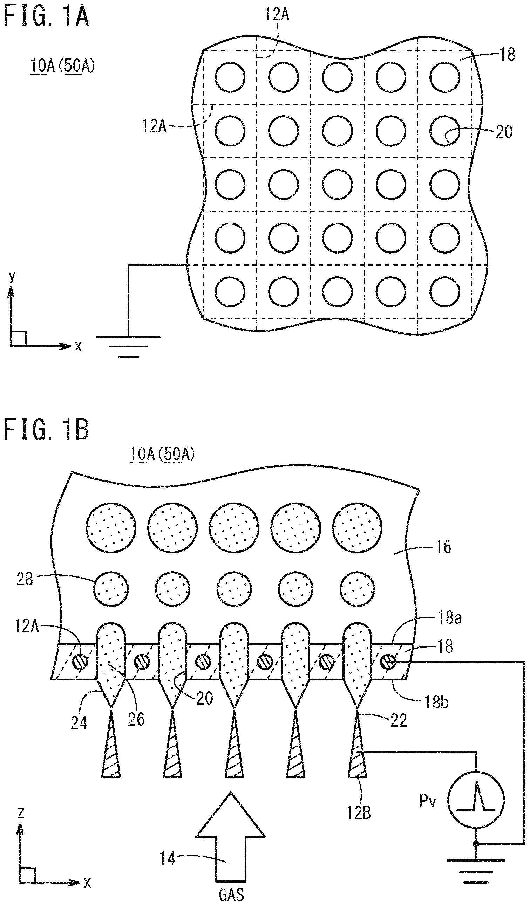

FIG. 1A is a plan view as seen from above, and showing a configuration of principal parts of a water treatment device (first water treatment device) according to a first embodiment, and FIG. 1B is a cross-sectional view taken along the z-direction, and showing principal parts of the first water treatment device;

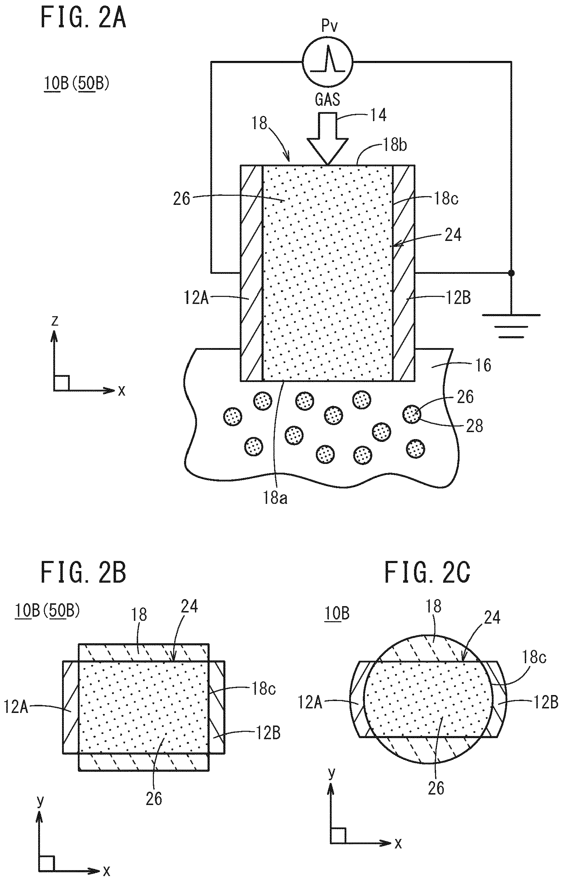

FIG. 2A is a cross-sectional view taken along the z-direction, and showing principal parts of a water treatment device (second water treatment device) according to a second embodiment, FIG. 2B is a cross-sectional view showing a disposed relationship between a rectangular columnar ceramic structural body and a first electrode and a second electrode, and FIG. 2C is a cross-sectional view showing a disposed relationship between a cylindrical columnar ceramic structural body and a first electrode and a second electrode;

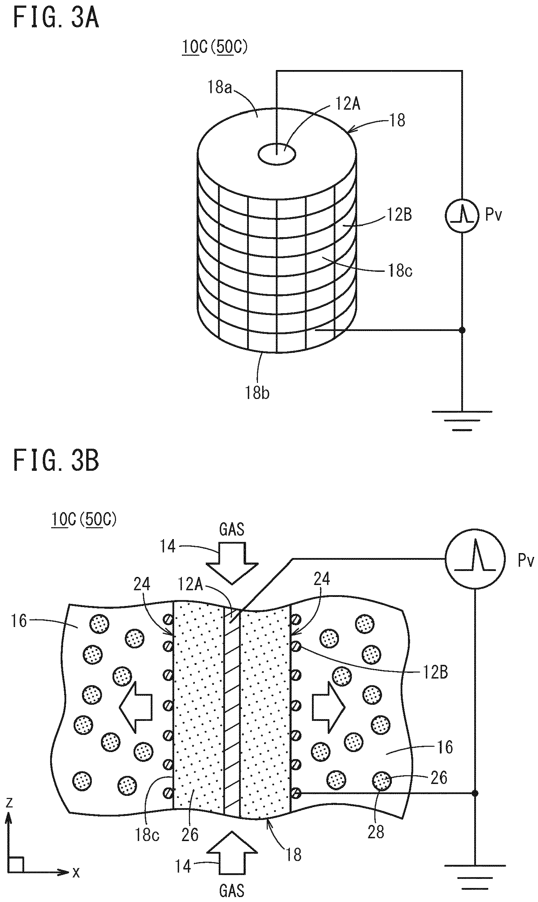

FIG. 3A is a perspective view showing principal parts of a water treatment device (third water treatment device) according to a third embodiment, and FIG. 3B is a cross-sectional view taken along the z-direction, and showing principal parts of the third water treatment device;

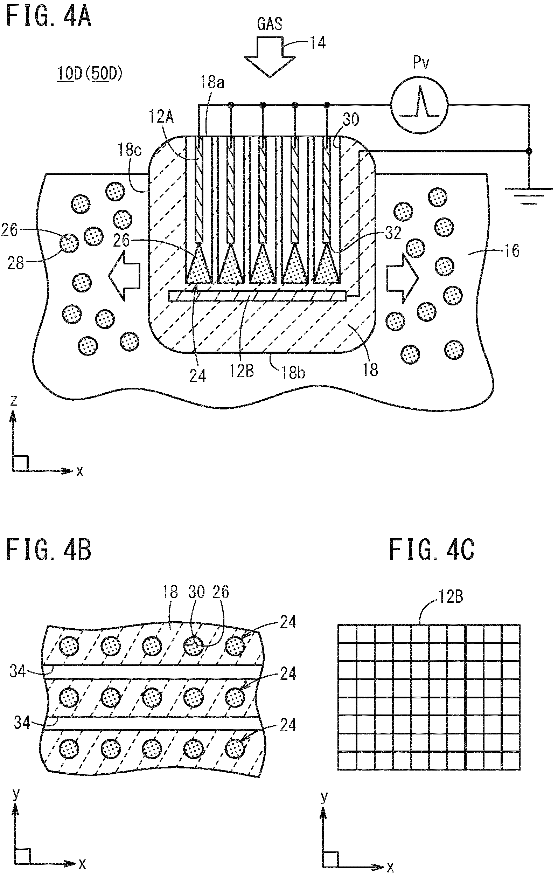

FIG. 4A is a cross-sectional view taken along the z-direction, and showing principal parts of a water treatment device (fourth water treatment device) according to a fourth embodiment, FIG. 4B is a cross-sectional view showing a configuration in which slits are formed in a ceramic structural body, and FIG. 4C is a plan view as seen from above, and showing a lattice-shaped second electrode;

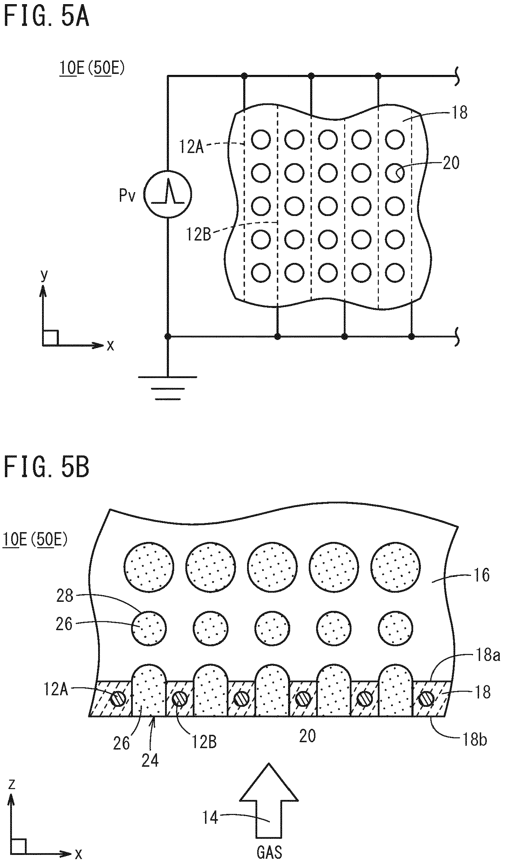

FIG. 5A is a plan view as seen from above, and showing a configuration of principal parts of a water treatment device (fifth water treatment device) according to a fifth embodiment, and FIG. 5B is a cross-sectional view taken along the z-direction, and showing principal parts of the fifth water treatment device; and

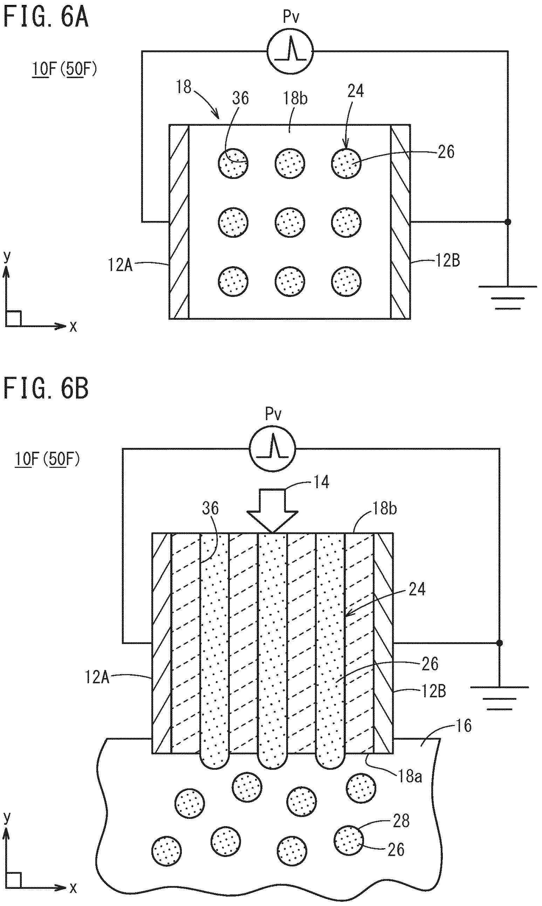

FIG. 6A is a cross-sectional view taken along the x-direction, and showing principal parts of a water treatment device (sixth water treatment device) according to a sixth embodiment, and FIG. 6B is a cross-sectional view taken along the z-direction, and showing principal parts of the sixth water treatment device.

### Description of Embodiments

Exemplary embodiments of a water treatment device, a water treatment method, a sterile water production device, and a sterile water production method according to the present invention will be described in detail below with reference to FIGS. 1A through 6B.

Initially, as shown in FIGS. 1A and 1B, a water treatment device (hereinafter referred to as a first water treatment device 10A) according to a first embodiment includes a first electrode 12A and a second electrode 12B, and a ceramic structural body 18 into which a gas 14 is introduced, and which introduces into water 16 a plasma 26 which is generated between the first electrode 12A and the second electrode 12B. In addition, the ceramic structural body 18 and at least one electrode from among the first electrode 12A and the second electrode 12B are constituted together in an integrated manner.

As shown in FIG. 1A, the first electrode 12A has a lattice shape, and is constituted in an integrated manner with the ceramic structural body 18. For example, as shown in FIG. 1B, the first electrode 12A may be arranged inside, or more specifically, may be embedded within the ceramic structural body 18. Further, although not illustrated, the first electrode 12A may be disposed on the surface of the ceramic structural body 18. In the case of being embedded therein, the first electrode 12A may be partially exposed.

As shown in FIG. 1B, the ceramic structural body 18 has a plate shape with one principal surface 18a thereof being disposed in the water 16, and the other principal surface 18b thereof being arranged oppositely to the one principal surface 18a. Furthermore, through holes 20 may be formed therein at positions corresponding to at least the lattice squares of the first electrode 12A. The ceramic that makes up the ceramic structural body 18 may be composed of a ceramic having a large number of open pores formed therein, or may be composed of a dense ceramic.

The second electrode 12B is needle-shaped, with distal ends 22 thereof being disposed in facing relation to the through holes 20 of the ceramic structural body 18.

The gas 14 is supplied in a direction (z-direction) from the other principal surface 18b toward the one principal surface 18a of the ceramic structural body 18.

The diameter of the through holes 20 formed in the ceramic structural body 18 preferably is 10 to 1000 µm, and the shortest distance from the first electrode 12A to the distal ends 22 of the second electrode 12B preferably is less than or equal to 10 mm. Further, the diameter of the first electrode 12A preferably is 10 to 1000 µm.

As the material component of the ceramic structural body 18, alumina, silica, titania, zirconia, or the like can be used. Further, as the material component of the first electrode 12A and the second electrode 12B, copper, iron, tungsten, stainless steel, platinum, or the like can be used.

Operations of the first water treatment device 10A will now be described. Initially, the gas 14 is supplied in a direction from the other principal surface 18b toward the one principal surface 18a of the ceramic structural body 18, whereby each of the through holes 20 functions as a nozzle for injecting the gas 14 into the water 16. In such a condition, for example, by grounding the first electrode 12A and applying a pulsed voltage (hereinafter referred to as a "pulsed voltage Pv") to the second electrode 12B, the plasma 26 is generated in spaces between the first electrode 12A and (the distal ends 22 of) the second electrode 12B. In other words, the spaces serve as plasma generating sites 24. The generated plasma 26 instantaneously passes through the through holes 20 and enters into the water 16 along the flow of the gas 14, and air bubbles 28 containing an active species produced by the plasma 26 are generated in the water 16. More specifically, the active species produced by the plasma 26 becomes dissolved in the water 16.

In the conventional method, because a discharge is made to occur in the air bubbles 28 inside the water 16, the energy efficiency and the efficiency with which the active species produced by the plasma 26 is dissolved in the water 16 are adversely affected. However, in the first water treatment device 10A, generation of the plasma 26 takes place in a gas, and therefore, a large electric power as was required in the conventional technique is rendered unnecessary, and thus energy efficiency can be improved. Further, since generation of the plasma 26 and dissolving of the active species produced by the plasma 26 into the water 16 can be carried out instantaneously, the active species produced by the generated plasma 26 can be dissolved in the water 16 without becoming deactivated, and the efficiency with which the active species is dissolved can be enhanced.

Next, a water treatment device (hereinafter referred to as a second water treatment device 10B) according to a second embodiment will be described with reference to FIGS. 2A to 2C.

Basically, the second water treatment device 10B has substantially the same configuration as the first water treatment device 10A described above, but differs therefrom in the following points.

More specifically, as shown in FIG. 2A, the ceramic structural body 18 is composed of a ceramic having a large number of open pores therein, and has a columnar shape which has one principal surface 18a disposed in the water 16, another principal surface 18b arranged oppositely to the one principal surface 18a, and a side surface 18c. The external shape of the ceramic structural body 18 may be a rectangular columnar shape, and may also be a cylindrical shape or a polygonal columnar shape. Further, a hollow section for enabling formation of a discharge therein may be provided in the interior of the ceramic structural body 18.

The gas 14 is supplied in a direction (z-direction) from the other principal surface 18b toward the one principal surface 18a of the ceramic structural body 18.

The first electrode 12A and the second electrode 12B are arranged in facing relation to each other on the side surface 18c of the ceramic structural body 18, and are formed in an integrated manner with the ceramic structural body 18. FIG. 2B shows an example in which the first electrode 12A and the second electrode 12B are arranged in facing relation to each other on side surfaces 18c of a rectangular columnar shaped ceramic structural body 18, and FIG. 2C shows an example in which the first electrode 12A and the second electrode 12B are arranged in facing relation to each other on a side surface 18c of a cylindrically shaped ceramic structural body 18. In both of these cases, the first electrode 12A and the second electrode 12B may be disposed inside the ceramic structural body 18, or may be disposed on a surface or surfaces (side surfaces) of the ceramic structural body 18. In the case of being embedded, the first electrode 12A and the second electrode 12B may be partially exposed. The first electrode 12A and the second electrode 12B may be formed, for example, in rectangular film shapes.

Operations of the second water treatment device 10B will now be described. Initially, the gas 14 is supplied in a direction from the other principal surface 18b toward the one principal surface 18a of the ceramic structural body 18, whereby the gas 14 passes through the large number of open pores formed inside the ceramic structural body 18, and flows into the water 16. More specifically, the large number of open pores function as nozzles for injecting the gas 14 into the water 16. In such a condition, for example, by applying the pulsed voltage Pv between the first electrode 12A and the second electrode 12B, the plasma 26 is generated within the ceramic structural body 18 in the space (plasma generating site 24) between the first electrode 12A and the second electrode 12B. The generated plasma 26 instantaneously enters into the water 16 through the open pores along the flow of the gas 14, and air bubbles 28 containing an active species produced by the plasma 26 are generated in the water 16. More specifically, the active species becomes dissolved in the water 16.

In this case, since generation of the plasma 26 takes place in the open pores of the ceramic structural body 18 through which the gas 14 flows, a large electric power as was required in the conventional technique is rendered unnecessary, and thus energy efficiency can be improved. Further, since generation of the plasma 26 and dissolving of the active species produced by the plasma 26 into the water 16 can be carried out instantaneously, the active species produced by the plasma 26 can be dissolved in the water 16 without becoming deactivated, and the efficiency with which the active species is dissolved can be enhanced.

Next, a water treatment device (hereinafter referred to as a third water treatment device 10C) according to a third embodiment will be described with reference to FIGS. 3A and 3B.

Basically, the third water treatment device 10C has substantially the same configuration as the first water treatment device 10A described above, but differs therefrom in the following points.

More specifically, as shown in FIGS. 3A and 3B, the ceramic structural body 18 is composed of a ceramic having a large number of open pores therein, has a columnar shape, and moreover, has one principal surface 18a to which a gas 14 is supplied, another principal surface 18b arranged oppositely to the one principal surface 18a and to which the gas 14 is supplied in the same manner, and a side surface 18c disposed in the water 16. The shape of the ceramic structural body 18 may be a cylindrical shape, and may also be a rectangular columnar shape or a polygonal columnar shape. Further, a hollow section for enabling formation of a discharge therein may be provided in the interior of the ceramic structural body 18.

The first electrode 12A has a columnar shape and is arranged inside the ceramic structural body 18 along the axial direction (z-direction) of the ceramic structural body 18. In the example of FIGS. 3A and 3B, an example is shown in which the first electrode 12A is disposed in a central part of the ceramic structural body 18. The first electrode 12A may be exposed from the one principal surface 18a and/or the other principal surface 18b of the ceramic structural body 18. In this case as well, the external shape of the first electrode 12A may be a cylindrical shape, and may also be a rectangular columnar shape or a polygonal columnar shape.

The second electrode 12B has a lattice shape, and is arranged on the ceramic structural body 18 in surrounding relation to the first electrode 12A. In this case, the second electrode 12B may be disposed inside the ceramic structural body 18, or may be disposed on a surface (side surface) of the ceramic structural body 18. In the case of being embedded, the second electrode 12B may be partially exposed.

Operations of the third water treatment device 10C will now be described. Initially, the gas 14 is supplied in a direction from the one principal surface 18a toward the other principal surface 18b, as well as in a direction from the other principal surface 18b toward the one principal surface 18a of the ceramic structural body 18, whereby the gas 14 passes through the large number of open pores formed inside the ceramic structural body 18, and flows into the water 16 from the side surface 18c of the ceramic structural body 18. More specifically, the large number of open pores function as nozzles for injecting the gas 14 into the water 16. Because the second electrode 12B has a lattice shape, there is hardly any obstruction caused by the second electrode 12B to ejection of the gas 14.

In such a condition, for example, by grounding the second electrode 12B, and applying the pulsed voltage Pv to the first electrode 12A, the plasma 26 is generated within the ceramic structural body 18 in the space (plasma generating site 24) between the first electrode 12A and the second electrode 12B. The plasma 26 instantaneously enters into the water 16 through the large number of open pores along the flow of the gas 14, and air bubbles 28 containing an active species produced by the plasma 26 are generated in the water 16. More specifically, the active species becomes dissolved in the water 16. Moreover, the pulsed voltage Pv may also be applied between the first electrode 12A and the second electrode 12B.

In this case as well, since generation of the plasma 26 takes place in the open pores of the ceramic structural body 18 through which the gas 14 flows, a large electric power as was required in the conventional technique is rendered unnecessary, and thus energy efficiency can be improved. Further, since generation of the plasma 26 and dissolving of the active species produced by the plasma 26 into the water 16 can be carried out instantaneously, the active species produced by the plasma 26 can be dissolved in the water 16 without becoming deactivated, and the efficiency with which the active species is dissolved can be enhanced.

Next, a water treatment device (hereinafter referred to as a fourth water treatment device 10D) according to a fourth embodiment will be described with reference to FIGS. 4A to 4C.

Basically, the fourth water treatment device 10D has substantially the same configuration as the first water treatment device 10A described above, but differs therefrom in the following points.

More specifically, as shown in FIG. 4A, the ceramic structural body 18 is composed of a ceramic having a large number of open pores therein, has a columnar shape, and moreover, has one principal surface 18a to which a gas 14 is supplied, another principal surface 18b arranged oppositely to the one principal surface 18b and which is disposed in the water 16, and a side surface 18c with a portion thereof being disposed in the water 16. The shape of the ceramic structural body 18 may be a cylindrical shape, and may also be a rectangular columnar shape or a polygonal columnar shape. Further, a plurality of holes 30 are formed in the ceramic structural body 18 extending from the one principal surface 18a in a direction toward the other principal surface 18b.

A plurality of first electrodes 12A have rod shapes, and are disposed respectively in the holes 30. The shape of each of the first electrodes 12A may be a cylindrical shape, and may also be a rectangular columnar shape or a polygonal columnar shape. A second electrode 12B is disposed within the ceramic structural body 18 between the bottom of the holes 30 and the other principal surface 18b. The second electrode 12B may be formed, for example, in a rectangular film shape, or in a lattice shape.

Operations of the fourth water treatment device 10D will now be described. Initially, the gas 14 is supplied in a direction from the one principal surface 18a toward the other principal surface 18b of the ceramic structural body 18, whereby the gas 14 passes through the plurality of holes 30 formed inside the ceramic structural body 18, and flows into the water 16 from the side surface 18c of the ceramic structural body 18. In this case as well, the large number of open pores of the ceramic structural body 18 function as nozzles for injecting the gas 14 into the water 16. In such a condition, by applying the pulsed voltage Pv between the first electrodes 12A and the second electrode 12B, the plasma 26 is generated within the ceramic structural body 18 between the first electrodes 12A and the second electrode 12B, and in particular, in the spaces (plasma generating sites 24) between the distal ends 32 of the first electrodes 12A and the bottom of the holes 30. The plasma 26 instantaneously enters into the water 16 through the large number of open pores along the flow of the gas 14, and air bubbles 28 containing an active species produced by the plasma 26 are generated in the water 16. More specifically, the active species becomes dissolved in the water 16.

In this case as well, since generation of the plasma 26 takes place in the open pores of the ceramic structural body 18 through which the gas 14 flows, a large electric power as was required in the conventional technique is rendered unnecessary, and thus energy efficiency can be improved. Further, since generation of the plasma 26 and dissolving of the active species produced by the plasma 26 into the water 16 can be carried out instantaneously, the active species produced by the plasma 26 can be dissolved in the water 16 without becoming deactivated, and the efficiency with which the active species is dissolved can be enhanced.

Further, in the case that the second electrode 12B has a film shape, the generated plasma 26 enters into the water 16 from the side surface 18c of the ceramic structural body 18. At this time, because the distance from first electrodes 12A in the central portion and in the vicinity of the central portion to the side surface 18c of the ceramic structural body 18 is long, the active species that is produced by the plasma 26 from the plasma generating sites 24 in the central portion and in the vicinity thereof, may not reach into the interior of the water 16, depending on the size of the ceramic structural body 18. Thus, for example as shown in FIG. 4B, within the ceramic structural body 18, slits 34 which extend to the side surface 18c (not shown in FIG. 4B) of the ceramic structural body 18 may be provided between adjacent plasma generating sites 24. Owing to this feature, the active species, which is generated by the plasma 26 from the plasma generating sites 24 positioned at or in the vicinity of the central portion, is capable of entering with good efficiency into the water 16 through the slits 34.

Further, by forming the second electrode 12B not in a film shape, but rather in a lattice shape as shown in FIG. 4C, and furthermore, by reducing the thickness from the plasma generating sites 24 up to the other principal surface 18b of the ceramic structural body 18, it becomes possible for the generated plasma 26 to enter into the water 16 both through the side surface 18c and through the other principal surface 18b of the ceramic structural body 18. By adopting such a configuration, the efficiency with which the active species produced by the plasma 26 is dissolved can be further enhanced.

Next, a water treatment device (hereinafter referred to as a fifth water treatment device 10E) according to a fifth embodiment will be described with reference to FIGS. 5A and 5B.

Basically, the fifth water treatment device 10E has substantially the same configuration as the first water treatment device 10A described above, but differs therefrom in the following points.

More specifically, as shown in FIG. 5A, the first electrode 12A and the second electrode 12B each include rod shapes that extend in one direction (y-direction), and further, are arranged alternately in a direction (x-direction) orthogonal to the one direction.

As shown in FIG. 5B, the ceramic structural body 18 is of a plate shape, including one principal surface 18a disposed in the water 16, and another principal surface 18b arranged oppositely to the one principal surface 18a. Furthermore, a plurality of through holes 20 are provided between the first electrode 12A and the second electrode 12B. The ceramic that makes up the ceramic structural body 18 may be composed of a ceramic having a large number of open pores formed therein, or may be composed of a dense ceramic.

The first electrode 12A and the second electrode 12B may be disposed inside the ceramic structural body 18, or may be disposed on a surface or surfaces of the ceramic structural body 18. In the case of being disposed inside, the first electrode 12A and the second electrode 12B may be partially exposed.

Operations of the fifth water treatment device 10E will now be described. Initially, the gas 14 is supplied in a direction from the other principal surface 18b toward the one principal surface 18a of the ceramic structural body 18, whereby the through holes 20 function as nozzles for injecting the gas 14 into the water 16. In such a condition, for example, by applying the pulsed voltage Pv between the first electrode 12A and the second electrode 12B, the plasma 26 is generated in spaces (through holes 20: plasma generating sites 24) between the first electrode 12A and the second electrode 12B. The plasma 26 instantaneously passes through the through holes 20 and enters into the water 16 along the flow of the gas 14, and air bubbles 28 containing an active species produced by the plasma 26 are generated in the water 16. More specifically, the active species becomes dissolved in the water 16.

In this case as well, since generation of the plasma 26 takes place in a gas in the through holes 20 of the ceramic structural body 18 through which the gas 14 flows, a large electric power as was required in the conventional technique is rendered unnecessary, and thus energy efficiency can be improved. Further, since generation of the plasma 26 and dissolving of the active species produced by the plasma 26 into the water 16 can be carried out instantaneously, the active species produced by the plasma 26 can be dissolved in the water 16 without becoming deactivated, and the efficiency with which the active species is dissolved can be enhanced.

Since the structure of the fifth water treatment device 10E can be simplified in comparison with that of the first water treatment device 10A or the like, advantages can be achieved in terms of making the device smaller in scale and reducing costs.

Next, a water treatment device (hereinafter referred to as a sixth water treatment device 10F) according to a sixth embodiment will be described with reference to FIGS. 6A to 6C.

Basically, the sixth water treatment device 10F has substantially the same configuration as the second water treatment device 10B described above, but differs therefrom in the following points.

More specifically, as shown in FIG. 6B, the ceramic structural body 18 has a plurality of through holes 36 therein that penetrate from the other principal surface 18b to the one principal surface 18a. In the example shown in FIG. 6A, nine through holes 36 are formed therein. The ceramic that makes up the ceramic structural body 18, in the same manner as that of the second water treatment device 10B, may be composed of a ceramic having a large number of open pores formed therein, or may be composed of a dense ceramic. Concerning other structural features, since they are almost the same as those of the second water treatment device 10B, redundant explanations thereof are omitted.

Operations of the sixth water treatment device 10F will now be described. Initially, the gas 14 is supplied in a direction from the other principal surface 18b toward the one principal surface 18a of the ceramic structural body 18, whereby the gas 14 passes through the plurality of through holes 36 formed inside the ceramic structural body 18, and flows into the water 16. More specifically, the plurality of through holes 36 function as nozzles for injecting the gas 14 into the water 16. In such a condition, for example, by applying the pulsed voltage Pv between the first electrode 12A and the second electrode 12B, the plasma 26 is generated within the ceramic structural body 18 in the respective through holes 36 (plasma generating sites 24) between the first electrode 12A and the second electrode 12B. The plasma 26 instantaneously passes through the plurality of through holes 36 and enters into the water 16 along the flow of the gas 14, and air bubbles 28 containing an active species produced by the plasma 26 are generated in the water 16. More specifically, the active species becomes dissolved in the water 16.

In this case, since generation of the plasma 26 takes place inside the through holes 36 of the ceramic structural body 18 through which the gas 14 flows, a large electric power as was required in the conventional technique is rendered unnecessary, and thus energy efficiency can be improved. Further, since generation of the plasma 26 and dissolving of the active species produced by the plasma 26 into the water 16 can be carried out instantaneously, the active species produced by the plasma 26 can be dissolved in the water 16 without becoming deactivated, and the efficiency with which the active species is dissolved can be enhanced.

In the above-described first water treatment device 10A through the sixth water treatment device 10F, by utilizing as the gas 14 an oxygen-containing gas, a nitrogen-containing gas, a mixed gas made up of oxygen and nitrogen, atmospheric air, or the like, an active species having a high bactericidal effect is produced by the plasma 26. As a result, it is possible for an active species having a bactericidal effect to be spread over a wide range in the water 16 in a short period of time, and to increase the concentration of the active species in the water 16. In addition, the water 16, for example, can be made into sterile water having a high bactericidal effect. Stated otherwise, the first water treatment device 10A through the sixth water treatment device 10F may be configured as a first sterile water production device 50A through a sixth sterile water production device 50F, which enable sterile water having a high bactericidal effect to be produced.

The water treatment device, the water treatment method, the sterile water production device, and the sterile water production method according to the present invention are not limited to the embodiments described above, and it goes without saying that various configurations could be adopted therein without departing from the essence and gist of the present invention.

## Claims

1. A water treatment device, comprising:
a first electrode (12A) and a second electrode (12B); and
a ceramic structural body (18) into which a gas (14) is introduced, and which is configured to introduce into water (16) an active species produced by a plasma (26) which is generated between the first electrode (12A) and the second electrode (12B);
wherein the ceramic structural body (18) and at least one electrode from among the first electrode (12A) and the second electrode (12B) are formed together in an integrated manner.

2. The water treatment device according to claim 1, wherein:
the one electrode is formed integrally with the ceramic structural body (18);
the one electrode has a lattice shape;
the ceramic structural body (18) has a plate shape including one principal surface (18a) that is disposed in the water (16), and another principal surface (18b) arranged oppositely to the one principal surface (18a), and further, the ceramic structural body has a through hole (20) formed therein at a location corresponding to at least a lattice square of the one electrode;
another electrode from among the first electrode (12A) and the second electrode (12B) has a needle shape, and a distal end thereof is arranged to face toward the through hole (20) of the ceramic structural body (18); and
the gas (14) is supplied in a direction from the other principal surface (18b) toward the one principal surface (18a) of the ceramic structural body (18).

3. The water treatment device according to claim 2, wherein the one electrode is disposed in an interior or on a surface of the ceramic structural body (18).

4. The water treatment device according to claim 1, wherein:
the ceramic structural body (18) has a columnar shape including one principal surface (18a) that is disposed in the water (16), another principal surface (18b) arranged oppositely to the one principal surface (18a), and a side surface (18c);
the first electrode (12A) and the second electrode (12B) are disposed in facing relation to each other on the side surface (18c) of the ceramic structural body (18), and are formed in an integrated manner with the ceramic structural body (18); and
the gas (14) is supplied in a direction from the other principal surface (18b) toward the one principal surface (18a) of the ceramic structural body (18).

5. The water treatment device according to claim 4, wherein the first electrode (12A) and the second electrode (12B) are disposed in an interior or on a surface of the ceramic structural body (18), and are formed in an integrated manner with the ceramic structural body (18).

6. The water treatment device according to claim 1, wherein:
the ceramic structural body (18) has a columnar shape, and further, includes one principal surface (18a) to which the gas (14) is supplied, another principal surface (18b) arranged oppositely to the one principal surface (18a) and to which the gas (14) is supplied, and a side surface (18c) disposed in the water (16);
the one electrode has a columnar shape, and is arranged along an axial direction of the ceramic structural body (18); and
another electrode from among the first electrode (12A) and the second electrode (12B) has a lattice shape, and is disposed on the ceramic structural body (18) in surrounding relation to the one electrode.

7. The water treatment device according to claim 6, wherein:
the one electrode is disposed in an interior of the ceramic structural body (18);
the other electrode is disposed in the interior or on a surface of the ceramic structural body (18); and
the one electrode and the other electrode are formed in an integrated manner with the ceramic structural body (18) .

8. The water treatment device according to claim 1, wherein:
the ceramic structural body (18) has a columnar shape, and further, includes one principal surface (18a) to which the gas (14) is supplied, another principal surface (18b) arranged oppositely to the one principal surface (18a) and which is disposed in the water (16), and a side surface (18c) with a portion thereof disposed in the water (16);
a plurality of holes (30) are formed in the ceramic structural body (18) from the one principal surface (18a) and extending toward the other principal surface (18b);
the one electrode includes rod shapes and which are arranged inside the holes (30); and
another electrode from among the first electrode (12A) and the second electrode (12B) is arranged within the ceramic structural body (18) between bottom parts of the holes (30) and the other principal surface (18b).

9. The water treatment device according to claim 1, wherein:
the first electrode (12A) and the second electrode (12B) are formed integrally with the ceramic structural body (18);
the first electrode (12A) and the second electrode (12B) each have rod shapes extending in one direction, and are arranged alternately in a direction orthogonal to the one direction;
the ceramic structural body (18) has a plate shape including one principal surface (18a) that is disposed in the water (16), and another principal surface (18b) arranged oppositely to the one principal surface (18a), the ceramic structural body also having a plurality of through holes (20) formed therein between the first electrode (12A) and the second electrode (12B); and
the gas (14) is supplied in a direction from the other principal surface (18b) toward the one principal surface (18a) of the ceramic structural body (18).

10. The water treatment device according to claim 9, wherein the first electrode (12A) and the second electrode (12B) are disposed in an interior or on a surface of the ceramic structural body (18), and are formed in an integrated manner with the ceramic structural body (18).

11. The water treatment device according to claim 1, wherein:
the ceramic structural body (18) has a columnar shape including one principal surface (18a) that is disposed in the water (16), another principal surface (18b) arranged oppositely to the one principal surface (18a), and a side surface (18c), and further, includes a plurality of through holes (36) that penetrate from the other principal surface (18b) to the one principal surface (18a);
the first electrode (12A) and the second electrode (12B) are disposed in facing relation to each other on the side surface (18c) of the ceramic structural body (18), and are formed in an integrated manner with the ceramic structural body (18); and
the gas (14) is supplied in a direction from the other principal surface (18b) toward the one principal surface (18a) of the ceramic structural body (18).

12. The water treatment device according to claim 11, wherein the first electrode (12A) and the second electrode (12B) are disposed in an interior or on a surface of the ceramic structural body (18), and are formed in an integrated manner with the ceramic structural body (18).

13. A water treatment method for performing a water treatment using the water treatment device according to any one of claims 1 to 12.

14. A sterile water production device, comprising:
a first electrode (12A) and a second electrode (12B); and
a ceramic structural body (18) into which a gas (14) is introduced, and which is configured to produce an active species in water (16), by introducing into the water (16) the active species produced by a plasma (26) which is generated between the first electrode (12A) and the second electrode (12B);
wherein the ceramic structural body (18) and at least one electrode from among the first electrode (12A) and the second electrode (12B) are formed together in an integrated manner.

15. A sterile water production method for producing sterile water using the sterile water production device according to claim 14.
